# DEMANDE DE BREVET EUROPEEN

(11) **EP 0 936 801 A1**
(43) Date de publication de la demande: **18.08.1999**
(21) Numéro de dépôt: 99400332.5
(22) Date de dépôt: 11.02.1999
(51) Int. Cl.: H04N 1/00, H04N 7/18

(54) **Télécopieur de retransmission d'images vidéo**

(30) Priorité: 11.02.1998 FR 9801607
(71) Demandeur: SAGEM SA, 75116 Paris (FR)
(72) Inventeur: Nicaise, Pierre, 60580 Coye la Foret (FR)
(74) Mandataire: Bloch, Gérard

(57) **Abrégé**

Le télécopieur comporte des circuits (14) de conversion, en signaux de télécopie, de signaux d'image vidéo reçus par une liaison d'entrée, des circuits d'interface d'émission (4, 13) reliant les circuits de conversion (14) à une ligne téléphonique (8), et comportant des circuits (12, 13) de réception de commandes d'activation de circuits séquenceurs (10) agencés pour commander l'émission des signaux de télécopie à travers les circuits d'interface (4, 13).

## Description

La présente invention concerne le domaine de la transmission de signaux d'image à travers un réseau de transmission, et il est ici fait notamment référence à un réseau de télésurveillance par caméras.

De façon classique, pour surveiller un local ou un site à protéger, on y installe des caméras de surveillance, dont on transmet les signaux d'image vidéo à un centre de surveillance. Il faut donc installer à cet effet un réseau de transmission vidéo, dont le coût est élevé. En outre, il n'est pas toujours possible d'installer un tel réseau, faute de fréquences radio allouées ou de chemin terrestre.

Dans d'autres applications, non liées à la sécurité, on peut vouloir transmettre des images à titre d'information et on peut en particulier songer à la visiophonie.

La présente invention vise à permettre une transmission d'image qui s'affranchisse des contraintes ci-dessus liées au réseau.

A cet effet, l'invention concerne un télécopieur selon la revendication 1.

Ainsi, on peut obtenir à distance au moins une image fixe, et éventuellement plusieurs images successives, d'une zone surveillée, en disposant uniquement d'une ligne téléphonique classique. Bref, on transforme l'ensemble d'une caméra vidéo et d'un télécopieur classique en un appareil photographique dont les images sont codées pour une transmission sur une ligne téléphonique, sans pour autant perdre beaucoup d'information par rapport à des images vidéo. La ligne peut appartenir à un réseau téléphonique public ou n'être qu'une ligne de liaison locale, de faible coût, vers un poste ou centre de surveillance, par exemple pour la commande d'un portier électronique d'immeubles.

L'invention sera mieux comprise à l'aide de la description suivante d'une forme préférée de réalisation du télécopieur de l'invention et d'une variante de réalisation, en référence au dessin annexé, sur lequel:
- la figure 1 est une vue d'ensemble représentant une caméra de surveillance reliée, par le télécopieur, à un moniteur de téléviseur et au réseau téléphonique,
- la figure 2 est une vue détaillée par blocs fonctionnels du télécopieur de la figure 1, et
- la figure 3 est une vue détaillée par bloc fonctionnels de la variante.

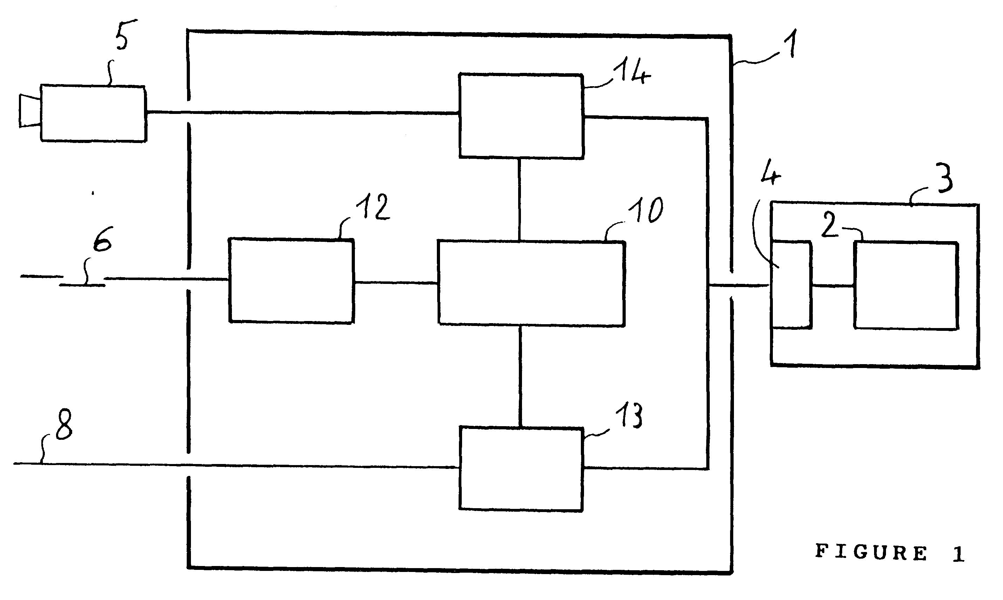

Le télécopieur 1 de la figure 1 relie dans cet exemple une caméra de surveillance 5 à un moniteur 2, intégré ici à un récepteur de télévision 3. Une liaison reliant le téléviseur 3 au télécopieur 1 comporte une prise 4 de la marque protégée PERITEL, intégrée au téléviseur 3. Des capteurs 6, externes au télécopieur 1, commandent, à travers des circuits 12 de détection d'alarme ou d'événements, une unité centrale à microprocesseur 10 pour la saisie d'images de la caméra 5 par des circuits de traitement d'image 14 reliés en sortie à la prise 4 et à des circuits 13 d'interface avec le réseau téléphonique 8, agencés pour au moins lancer des appels sur celui-ci. L'unité centrale 10 est en liaison avec les divers circuits, pour gérer le télécopieur 1.

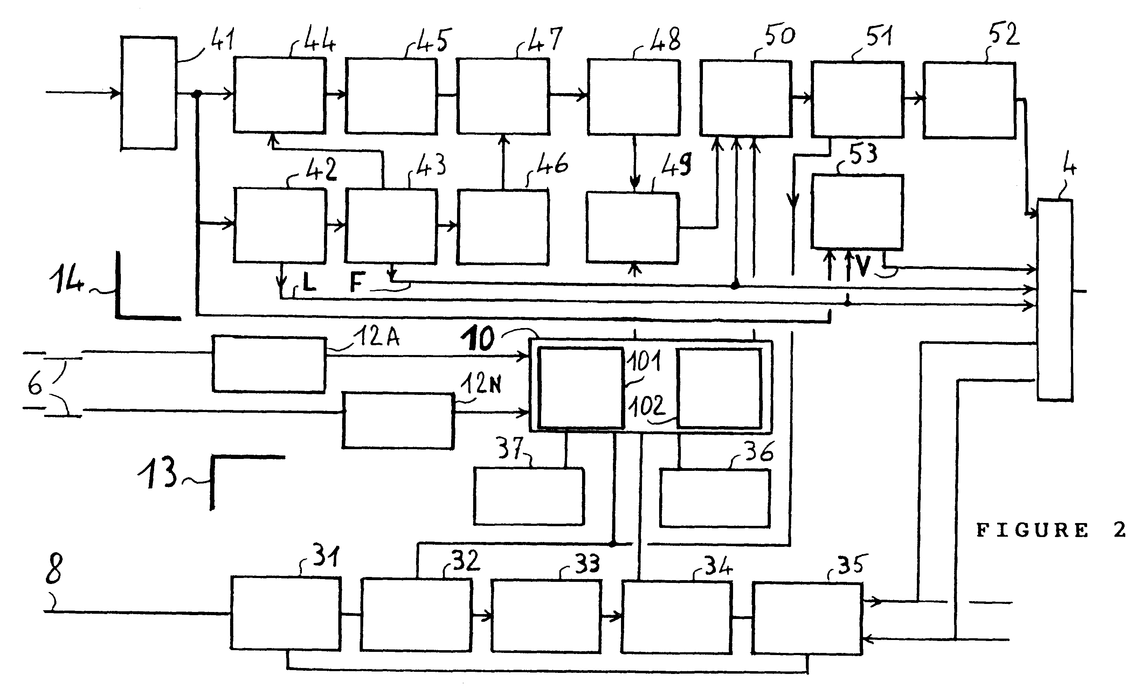

La figure 2 illustre plus en détails la structure fonctionnelle du télécopieur 1.

Les circuits 13 et 14 y sont représentés en détails, sous les références 31 à 37 et 41 à 53, respectivement.

Le circuit 31 est une interface ligne reliant un modem 32 à la ligne 8. En sortie (réception) du modem 32 sont en outre intégrés, aux circuits 13, des circuits de réception de télécommandes. Ainsi, le circuit 33 détecte des informations fournies par la ligne réseau 8, lors d'un appel entrant, indiquant l'identité de l'appelant (service CLASS). Le circuit aval 34 comporte une table fournissant en réponse un numéro spécifique d'une demande de séquence d'exploitation du télécopieur 1, c'est-à-dire ici des images reçues de la caméra 5. Des circuits aval de poste téléphonique 35 sont en outre raccordés à la ligne par l'interface 31 et à la prise 4 entre autres, pour échanger des signaux phoniques d'entrée/sortie (microphone/haut-parleur). Le microprocesseur 10 est en particulier relié au modem 32 et à la table 34.

Le circuit 36, fonctionnellement associé au circuit 34, comporte une mémoire préenregistrée de séquences de traitement, classées par numéro, c'est-à-dire en fonction de l'identité téléphonique des appelants. Le circuit 37 comporte une mémoire d'en-têtes de télécopies, ou d'incrustations dans une image vidéo convertie en image télécopie, classées aussi par numéros appelants.

Les circuits d'entrée d'alarme 12 comportent une pluralité de circuits à mémoire comme 12A, 12N commandés par un capteur d'alarme 6, ou d'événement, particulier à chacun et dont ils détectent l'état.

Chaque circuit 12A, 12N est relié au microprocesseur 10 pour commander la saisie d'une ou plusieurs images de la caméra 5, avec présentation éventuelle de celles-ci sur le moniteur 2 et émission éventuelle d'une télécopie comportant ces images, ou d'une séquence de telles télécopies. Les mémoires 12A, 12N comportent à cet effet un ou plusieurs numéros de télécopieurs à appeler par les circuits 13 (ou font référence à un annuaire 101 contenu dans le microprocesseur 10), ainsi qu'un numéro de séquence d'exploitation (cf. mémoire 36), pour personnaliser le traitement de chaque événement, ou alarme. Un bloc de calcul 102 du microprocesseur 10 exécute ces séquences.

Les circuits 14 de traitement d'image comportent une prise vidéo 41 de raccordement de la caméra 5 dont la sortie vidéo alimente un circuit d'entrée 42 de récupération de synchronisation ligne et trame d'image vidéo, un convertisseur d'entrée analogique/numérique 44 qui exploite la partie image du signal vidéo, et un circuit de sortie 53, de cadrage du signal d'image vidéo qui est appliqué à la prise 4 pour être restitué sur le moniteur 2.

Le circuit de synchronisation 42 commande le convertisseur 44 à travers un circuit d'horloge pixel 43 qu'il asservit, effectuant un échantillonnage de l'image vidéo reçue à une fréquence pixel, c'est-à-dire transformant le signal analogique à évolution continue en une suite de valeurs numériques discrètes. Un circuit aval 45 à seuil fournit une valeur binaire 0 ou 1, ou un niveau de gris pour chaque échantillon, et écrit, par un circuit 47, dans une mémoire 48 pour y ranger les échantillons successifs. Le circuit de synchronisation 42 commande des circuits 46, de comptage de lignes et de comptage de pixels dans une ligne, permettant de repérer une position courante de pixel dans une image. Les circuits 42 commandent de ce fait, par les circuits 46, le circuit d'adressage 47, positionnant les pixels courants dans l'image (48). Le circuit d'horloge 43 fournit en outre un signal F de synchronisation trame au moniteur 2, à travers la prise 4.

Le circuit 49 sert à la capture d'images, depuis la mémoire 48, sous la commande de l'unité centrale 10 commandée par les circuits 12, c'est-à-dire qu'ici l'unité centrale 10 active, ou réveille, l'ensemble de conversion 14, préalablement au lancement d'un appel téléphonique de transmission par télécopie d'une image vidéo figée. On notera cependant qu'il aurait pu être prévu un fonctionnement permanent de l'ensemble 14 de conversion de l'image vidéo, l'unité centrale 10 ne commandant que les circuits d'émission, c'est-à-dire les circuits 51, 52 et les circuits 31, 32 d'appel.

Le circuit 49 alimente en images un circuit 50 de cadrage d'image télécopie, commandé par l'unité centrale 10 et recevant le signal de synchronisation trame F du circuit horloge 43.

Le circuit 53, déjà mentionné, reçoit en outre, comme la prise 4, un signal L de synchronisation ligne issu du circuit 42.

En aval du circuit de cadrage 50 se trouvent, dans l'ordre, le circuit 51, d'émission de télécopies sur la ligne 8, commandant le modem 32 à cet effet, et le circuit 52 de commande d'affichage, fournissant le signal de télécopie à l'entrée vidéo de la prise 4, c'est-à-dire après transformation des pixels d'une ligne en un signal analogique vidéo associé à une impulsion de synchronisation ligne.

Le fonctionnement du télécopieur 1 va maintenant être expliqué plus en détails.

Lorsque se produit un événement externe, par exemple le fait qu'un visiteur sonne à la porte d'un appartement ou immeuble ayant un portier électronique comportant la caméra 5, le circuit 12A, 12N concerné est activé par la sonnette et commande la séquence voulue, préalablement mémorisée, à travers l'unité centrale 10.

Il peut aussi être prévu des émissions cycliques sans événement externe; c'est alors une base de temps qui commande l'unité centrale 10.

C'est par exemple simplement l'affichage d'une image sur le moniteur 2, ici prévu, si l'appartement concerné est occupé. Dans d'autres cas, plus généraux, par exemple d'alarme incendie dans un local inhabité détectée par un capteur 6, ce sera l'envoi de télécopies vers un ou plusieurs destinataires, reproduisant une ou plusieurs des images vidéo, éventuellement provenant de plusieurs caméras comme 5, avec un multiplexeur de prises comme 41.

En pareil cas, une image vidéo est échantillonnée par le CAN 44 et ainsi figée sous forme d'image de pixels de télécopie pour ensuite être exploitée au format télécopie (50).

L'image de télécopie ainsi constituée reçoit, de l'unité centrale 10, un en-tête lu dans la mémoire 37 et la page de télécopie est émise par le modem 32 commandé par le circuit d'émission 51 et l'unité centrale 10. L'appel vers le destinataire a préalablement été lancé par l'unité centrale 10 et le circuit de séquence d'émission 102, en fonction du numéro d'appel mémorisé qui est associé à l'entrée de détection d'événement ayant activé le télécopieur 1. Il y a ainsi une pluralité de numéros d'appel de télécopieurs correspondant à une pluralité respective d'entrées des récepteurs de commandes 12.

Le circuit 52 affiche en outre la télécopie sur le moniteur 2. Le circuit 53 permet d'afficher localement, sur le téléviseur 3, le signal vidéo de la caméra 5.

L'activation du télécopieur 1 peut aussi être télécommandée par un appel téléphonique entrant provenant de la ligne 8. Dans cet exemple, les télécommandes sont les identités de postes appelants. Le circuit 33 détecte des signaux d'identité de l'abonné appelant, c'est-à-dire le numéro d'appel téléphonique de celui-ci (service CLASS) et le circuit 34 fournit alors un numéro spécifique correspondant d'une demande de séquence, si le numéro appelant est identifié. Les télécopies d'images vidéo sont alors envoyées vers un numéro d'appel téléphonique préenregistré de la séquence, ou tout simplement vers le numéro qui vient d'appeler. Si c'est un télécopieur qui appelle, on peut alors lui transmettre immédiatement la télécopie dans la même communication. Le télécopieur appelant peut en particulier conserver la liaison pendant un temps déterminé pour ainsi commander l'émission continue d'un flux d'images de télécopie. On a donc encore ainsi, comme pour les circuits 12, une pluralité de commandes possibles. Un centre de surveillance peut télécommander un balayage des images de diverses caméras, même en l'absence d'alarme, et ainsi disposer d'un réseau de télévision lente, intégrant le réseau téléphonique.

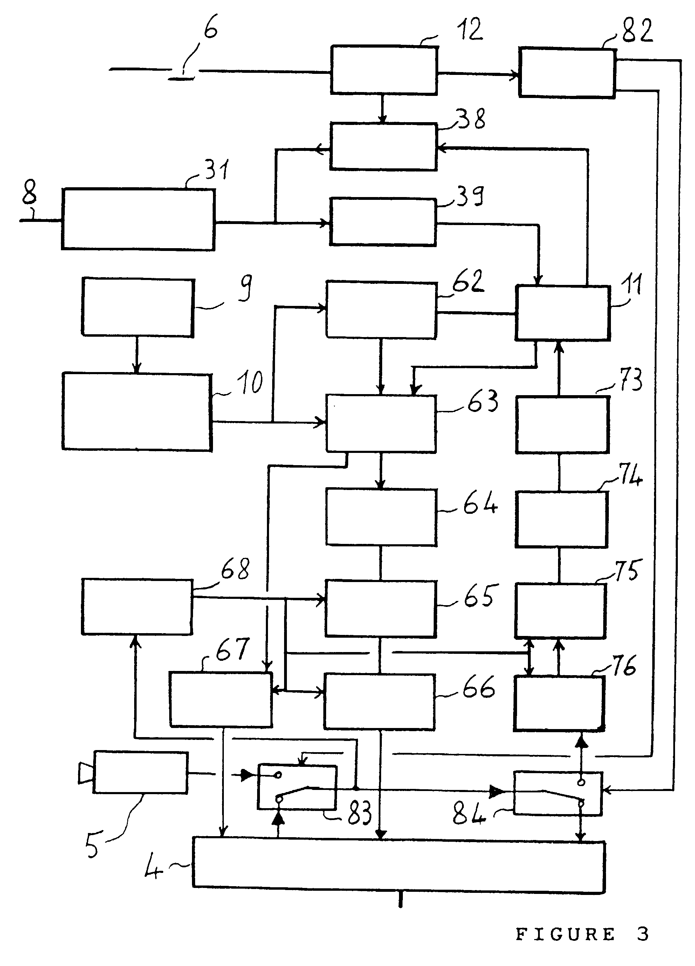

La figure 3 illustre, par des blocs fonctionnels, la variante de réalisation. Les éléments semblables à ceux des figures 1 et 2 y ont conservé leur référence et la description détaillée est axée sur les éléments qui n'existent pas dans les figures 1 et 2.

Le télécopieur a, dans cette variante, les fonctions supplémentaires d'aiguilleur pour brasser entre elles les divers liaisons auxquelles il est raccordé, et d'édition ou composition de texte. Hormis les entrées d'alarmes (12), le télécopieur est relié à la prise 4, à la caméra 5 et au réseau 8 et il peut établir toute connexion voulue entre ces trois dernières entités. Il comporte à cet effet deux circuits d'aiguillage 83 et 84, représentés sous la forme de lames mobiles, dont les bases fixes respectives sont reliées entre elles et à un circuit 68 de récupération d'horloge de synchronisation ligne et trame, qui synchronise les circuits 65, 66, 67, 75, 76 indiqués plus loin.

Les première et seconde branches du circuit 83 sont reliées respectivement à la sortie vidéo de la caméra 5 et à une sortie vidéo de la prise 4 du téléviseur 3. Dans le circuit 84, le signal sélectionné par l'aiguilleur ou multiplexeur 83 est aiguillé, ou démultiplexé, vers la prise 4 ou vers une chaîne 76 - 73 de conversion en pixels d'image de télécopie, alimentant la mémoire de télécopies 11.

La chaîne ci-dessus comporte, d'amont en aval, un circuit 76 de conversion analogique numérique (CAN), un circuit 75 à entrée vidéo, commandant un circuit 74 de conversion vidéo/pixels d'images de télécopie et un circuit 73 de mise en page télécopie alimentant la mémoire 11 de télécopies. Une chaîne 62 à 66, de conversion pixels/vidéo relie en sens inverse, la mémoire 11 à la prise 4. Cette chaîne comporte en tête un circuit 62 d'édition de texte, ou caractères semblables, saisis par un pupitre ou clavier 9 relié à l'unité centrale 10, qui commande le circuit 62 et le circuit aval 63 de mise en page, commandé aussi par le circuit 62 et alimenté en pixels par la mémoire 11. Le circuit 62 peut encore mémoriser une image de texte dans la mémoire 11 et la rappeler ultérieurement. Le circuit aval 64 effectue la conversion images pixels/signal vidéo numérique et commande un convertisseur numérique/analogique 66 commandant le moniteur 2 à travers la prise 4.

Le circuit 63 commande un circuit 67 d'incrustation de l'image du circuit 66 dans une image du téléviseur 3, c'est-à-dire de substitution d'une zone d'image vidéo d'un programme, reçu par une antenne du téléviseur 3, par l'image fixe du circuit 66. Le circuit 67 est, à cet effet, relié en sortie à la prise 4 pour commander cette incrustation. La synchronisation trame et ligne des images est effectuée sous la commande du circuit 68 qui extrait, du signal vidéo qu'il reçoit, une impulsion de début de trame, ou image, et des impulsions plus courtes de début de ligne. Des compteurs de lignes et de pixels dans chaque ligne permettent au circuit 67 de repérer la position d'une zone ou image de pixels à incruster dans l'image vidéo d'antenne (quelconque), par comparaison entre la position courante de pixel ligne et les limites de la zone à incruster, déterminées par le circuit 63 de mise en page.

Comme expliqué ci-dessus, les circuits qui viennent d'être décrits permettent, par la première branche du circuit 83, de relier la caméra 5 au moniteur 2 en alternance avec la mémoire de télécopie 11, par le circuit d'aiguillage 84.

La sortie d'antenne du téléviseur 3 peut se substituer, dans ce schéma, à la caméra 5, par commutation de l'aiguilleur 83.

La mémoire 11 est par ailleurs en liaison avec la ligne téléphonique 8 par le circuit d'interface 31, à travers un circuit 38 d'émission de télécopies et un circuit homologue 39, de réception. Le circuit d'alarme 12 commande (à travers l'unité centrale 10), le circuit d'émission 38, pour la lecture de la mémoire 11, ayant reçu une ou des images vidéo de la caméra 5, et pour l'émission d'une télécopie correspondante d'images vidéo figées. Le circuit 12 commande, avec l'unité centrale 10, un circuit 82 de commande d'aiguillage, positionnant les circuits d'aiguillage 83 et 84 en fonction des liaisons à établir. Le pupitre 9 commande, à travers l'unité centrale 10, le circuit 82 pour commander l'établissement de toute liaison interne souhaitée, lorsqu'un opérateur est présent; il peut donc se substituer au circuit 12. Ainsi, séparément des fonctions de surveillance vidéo, l'opérateur peut éditer ou composer un texte, le visualiser sur le moniteur 2 et l'émettre en télécopie. Il peut même être prévu de commenter ainsi par écrit des images de la caméra 5.

Outre des télécopies à émettre, comme du texte par exemple, on peut en outre visualiser, sur le moniteur 2, toute télécopie reçue de la ligne 8. Le télécopieur est ainsi apte à recevoir et à émettre des signaux vidéo et des signaux de télécopie, avec conversion éventuelle vidéo/télécopie, dans un sens ou dans l'autre. C'est donc un brasseur convertisseur de signaux d'image.

Hormis les fonctions de surveillance évoquées plus haut, une paire de tels télécopieurs permet par exemple d'établir des liaisons de visiophonie à faible vitesse de rafraichissement.

## Revendications

1. Télécopieur comportant des moyens (14) de conversion, en signaux de télécopie, de signaux d'image vidéo reçus par une liaison d'entrée, des moyens d'interface d'émission (4, 13) agencés pour relier les moyens de conversion (14) à une ligne téléphonique (8), caractérisé par le fait que les moyens de conversion comportent des moyens (42) de récupération de signaux de synchronisation d'image vidéo, agencés pour commander des moyens (46 - 48) de positionnement de pixels dans l'image de télécopie, et il est prévu des moyens (12, 13) de réception de commandes d'activation de moyens séquenceurs (10, 102) agencés pour commander l'émission des signaux de télécopie à travers les moyens d'interface (4, 13).

2. Télécopieur selon la revendication 1, dans lequel les moyens séquenceurs (10, 102) sont agencés pour réveiller les moyens de conversion (14) préalablement à ladite émission.

3. Télécopieur selon l'une des revendications 1 et 2, dans lequel les moyens de conversion comportent des moyens (50) de cadrage de l'image de télécopie.

4. Télécopieur selon l'une des revendications 1 à 3, dans lequel les moyens de réception (12) sont agencés pour détecter l'état d'au moins un capteur d'événement.

5. Télécopieur selon l'une des revendication 1 à 4, dans lequel les moyens de réception (33, 34) sont agencés pour recevoir des télécommandes.

6. Télécopieur selon la revendication 5, dans lequel les moyens de réception (33, 34) sont intégrés aux moyens (13) d'interface à la ligne téléphonique (8).

7. Télécopieur selon l'une des revendications 1 à 6, dans lequel les moyens de réception (12; 33) sont agencés pour identifier les commandes et comportent des moyens mémoires pour commander l'exécution, par les moyens séquenceurs (10, 102), de séquences d'émission de signaux de télécopie particulières à chaque commande.

8. Télécopieur selon la revendication 7, dans lequel les moyens mémoires comportent une pluralité de numéros d'appel de télécopieurs correspondant à une pluralité respective d'entrées des moyens de réception (12).

9. Télécopieur selon l'une des revendication 1 à 8, dans lequel les moyens d'interface comportent des moyens (37) de composition de télécopies, agencés pour ajouter un en-tête à l'image convertie.

10. Télécopieur selon l'une des revendications 1 à 9, dans lequel des moyens d'interface d'émission (4, 13) sont agencés pour relier les moyens de conversion (14) à un moniteur (2)

11. Télécopieur selon la revendication 10, dans lequel il est prévu des moyens d'interface de réception de télécopies (10, 11, 39, 63) provenant de la ligne téléphonique (8) agencés pour commander le moniteur (2) à travers des moyens (64 - 66) convertisseurs de signaux d'image de télécopie en signaux vidéo, reliés aux moyens d'interface (4) avec le moniteur (2).

12. Télécopieur selon l'une des revendications 10 et 11, dans lequel il est prévu des moyens (62) de composition de texte sous forme de télécopie à partir d'un pupitre (9) du télécopieur, agencés pour commander le moniteur (2) à travers des moyens (64 - 66) convertisseurs de signaux d'image de télécopie en signaux vidéo, reliés aux moyens d'interface (4) avec celui-ci.

13. Télécopieur selon l'une des revendications 10 à 12, dans lequel il est prévu des moyens (67, 68) d'incrustation d'une image de télécopie dans une image vidéo, agencés pour détecter des signaux de synchronisation vidéo et se synchroniser dessus pour incruster l'image de télécopie.
